# EUROPÄISCHE PATENTSCHRIFT

(11) **EP 3 433 140 B1**
(45) Veröffentlichungstag und Bekanntmachung des Hinweises auf die Patenterteilung: **31.03.2021**
(21) Anmeldenummer: 16788475.8
(22) Anmeldetag: 21.10.2016
(51) Int. Cl.: B60R 25/24, G07C 9/00

(54) **AUTORISIERUNG DER NUTZUNG EINES KRAFTFAHRZEUGS**
AUTHORIZING THE USE OF A MOTOR VEHICLE
AUTORISATION D'UTILISER UN VÉHICULE À MOTEUR

(30) Priorität: 22.03.2016 DE 102016204749
(43) Veröffentlichungstag der Anmeldung: 30.01.2019
(73) Patentinhaber: Bayerische Motoren Werke Aktiengesellschaft, 80809 München (DE)
(72) Erfinder: HEINBOCKEL, Stefan, 81735 München (DE); WAGATHA, Helmut, 85764 Oberschleissheim (DE); HOCKE, Fredrik, 80336 München (DE); WISTORF, Ralf, 81737 München (DE)
(86) Internationale Anmeldenummer: PCT/EP2016/075335
(87) Internationale Veröffentlichungsnummer: WO 2017/162317

(56) Entgegenhaltungen:
- EP-A2- 0 867 971
- WO-A1-2009/143415
- WO-A1-2015/084852
- DE-B3-102005 013 910
- US-A1- 2013 063 247

## Beschreibung

Die Erfindung betrifft insbesondere ein Verfahren zur Autorisierung der Nutzung eines Kraftfahrzeugs, das mindestens eine erste und eine zweite Antenne aufweist, wobei die erste Antenne und die zweite Antenne räumlich voneinander beabstandet sind. Bei dem Kraftfahrzeug handelt es sich insbesondere um ein zwei - oder vierrädriges Kraftfahrzeug.

Aus der DE 10 2005 013910 B3 ist ein gattungsgemäßes Verfahren zur Autorisierung der Nutzung eines Kraftfahrzeugs bekannt. Weiter ist in diesem Zusammenhang aus der US 2013/063247 A1 die Verwendung eines winkelauflösenden Magnetfeldsensors bekannt.

Bei solchen bekannten Verfahren ist es wünschenswert, diese gegen Manipulationen weiter zu verbessern.

Die Aufgabe der Erfindung besteht insbesondere in der Bereitstellung eines Verfahrens zur Autorisierung der Nutzung eines Kraftfahrzeugs mit einem verbesserten Schutz gegen Manipulationen.

Diese Aufgabe wird insbesondere durch ein Verfahren zur Autorisierung der Nutzung eines Kraftfahrzeugs mit den Merkmalen des unabhängigen Verfahrensanspruchs gelöst. Vorteilhafte Ausgestaltungen des erfindungsgemäßen Verfahrens sind Gegen- stand der abhängigen Verfahrensansprüche.

Das erfindungsgemäße Verfahren geht aus von einem Verfahren zur Autorisierung der Nutzung eines Kraftfahrzeugs, insbesondere ein zwei - oder vierrädriges Kraftfahr- zeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist.

In einem ersten Schritt sendet die erste Fahrzeugantenne ein erstes Signal aus, das von der Identifikationsgeber-Antenne empfangen wird.

In einem zweiten Schritt ermittelt der Identifikationsgeber zumindest eine der räumlichen Komponenten des ersten elektromagnetischen Feldes des empfangenen ersten Signals, vorzugsweise unter Verwendung eines winkelauflösenden Magnetfeldsensors.

In einem dritten Schritt sendet die zweite Fahrzeugantenne ein zweites Signal aus, das von der Identifikationsgeber-Antenne empfangen wird.

In einem vierten Schritt ermittelt der Identifikationsgeber zumindest eine der räumlichen Komponenten des zweiten elektromagnetischen Feldes des empfangenen zweiten Signals, vorzugsweise unter Verwendung des winkelauflösenden Magnetfeldsensors.

In einem fünften Schritt überträgt der Identifikationsgeber die ermittelte zumindest eine räumliche Komponente des ersten elektromagnetischen Feldes des empfangenen ersten Signals und die ermittelte zumindest eine räumliche Komponente des zweiten elektromagnetischen Feldes des empfangenen zweiten Signals oder erste entsprechende Daten zum Fahrzeug.

In einem sechsten Schritt ermittelt ein erster Rechner, vorzugsweise ein Rechner im Kraftfahrzeug, den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals, und

in einem siebten Schritt stellt das Kraftfahrzeug nur dann ein Autorisierungssignal zur Autorisierung der Nutzung des Kraftfahrzeugs bereit, wenn der ermittelte Winkel einen vorbestimmten Schwellenwert überschreitet.

Erfindungsgemäß ist bzw. wird der Identifikationsgeber mit einem Bewegungssensor versehen. Der Bewegungssensor ermittelt, ob er bzw. ob der Identifikationsgeber bewegt wird und der Identifikationsgeber sendet nur dann das erste und/oder ein zweites Autorisierungssignal zur Autorisierung der Nutzung des Kraftfahrzeugs an das Kraftfahrzeug, wenn der Bewegungssensor eine Bewegung des Identifikationsgebers ermittelt. Die ersten entsprechenden Daten können das zweite Autorisierungssignal darstellen bzw. diesen entsprechen.

Zusammenfassend kann durch das erfindungsgemäße Verfahren mithilfe von mindestens zwei räumlich separierten bzw. beabstandeten Sendern die Position des Empfängers bzw. des Identifikationsgeberswinkelaufgelöst bestimmt werden. Werden die Signale der beabstandeten Sender in manipulativer Absicht durch einen Repeater weitergeleitet, wird die Laufzeit verlängert und die Winkelinformation geht verloren. Das er- findungsgemäße winkelauflösende Verfahren kann eine solche Manipulation der Funkstrecke erkennen, indem die Parallelität der Signale von dem Identifikationsgeber und/oder von dem Kraftfahrzeug erkannt wird und dieser und/oder dieses die Aussendung eines Autorisierungssignals verhindert.

Entsprechend einer bevorzugten Weiterbildung des erfindungsgemäßen Verfahrens ist vorgesehen, dass der Bewegungssensor wiederholt ermittelt, ob er bewegt wird. Vorzugsweise versieht der Bewegungssensor jeweils bei einer erkannten bzw. ermittelten Bewegung das Auftreten der Bewegung und/oder die Art der Bewegung mit einem Zeitstempel.

Durch die vorstehenden erfindungsgemäßen optionalen Maßnahmen werden Manipulationen zusätzlich erschwert bzw. vermieden.

Bei einer bevorzugten Ausführungsform des erfindungsgemäßen Verfahrens ist vorgesehen, dass jeweils das mit einem Zeitstempel versehene Auftreten der Bewegung und/oder die mit einem Zeitstempel versehene jeweilige Art der Bewegung in einem Datenspeicher im Identifikationsgeber und/oder in einem Datenspeicher in dem Kraftfahrzeug gespeichert und für einen späteren Bewegungs-Muster-Vergleich mit einem Referenz-Bewegungsmuster bereitgehalten wird.

Alternativ oder ergänzend ist bei einer Ausführungsform des erfindungsgemäßen Verfahrens vorgesehen, dass der Bewegungs-Muster-Vergleich von einem Rechner im Identifikationsgeber und/oder von einem Rechner im Kraftfahrzeug durchgeführt wird und der Identifikationsgeber und/oder das Kraftfahrzeug nur dann ein Autorisierungssignal zur Autorisierung der Nutzung des Kraftfahrzeugs bereitstellt, wenn der Rechner im Identifikationsgeber und/oder der Rechner im Kraftfahrzeug einen vorbestimmten Grad an Übereinstimmung des Bewegungsmusters des Identifikationsgebers mit dem Referenz-Bewegungsmuster ermittelt.

Bei einer besonders bevorzugten Ausgestaltung des erfindungsgemäßen Verfahrens ist vorgesehen, dass der Identifikationsgeber nur dann Daten, wie ein Autorisierungssignal, aussendet, wenn er aktuell bewegt wird.

Weiter ist bei einer besonders bevorzugten Ausführungsform des erfindungsgemäßen Verfahrens vorgesehen, dass das Referenz-Bewegungs-Muster das Bewegungsmuster einer typischen Annäherung an das Fahrzeug ist.

Bei einer Ausgestaltung des erfindungsgemäßen Verfahrens wird das Referenz-Bewegungsmuster für jeden Berechtigten und/oder für jeden Identifikationsgeber erhoben und für einen späteren Bewegungs-Muster-Vergleich im Identifikationsgeber und/oder im zugeordneten Kraftfahrzeug gespeichert.

Entsprechend einer bevorzugten Ausführungsform des erfindungsgemäßen Verfahrens ist vorgesehen, dass der Bewegungssensor durch einen Beschleunigungssensor gebildet wird.

Die vorstehenden erfindungsgemäßen optionalen Maßnahmen sind geeignet Manipulationen zusätzlich zu erschweren bzw. zu vermeiden.

Alternativ oder ergänzend kann bei einer Ausgestaltung des erfindungsgemäßen Verfahrens vorgesehen sein, dass der Zeitabstand zwischen der Aussendung des ersten Signals durch die erste Fahrzeugantenne und der Aussendung des zweiten Signals durch die zweite Fahrzeugantenne zeitlich so kurz - aber verschieden von Null - gewählt wird, dass der vom Fahrer mitgeführte Identifikationsgeber beim Zugehen des Fahrers auf das Fahrzeug weitgehend nicht bewegt wird. Hierdurch wird die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar.

Bei einer Weiterbildung des erfindungsgemäßen Verfahrens ist vorgesehen, dass das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

Auch diese optionalen Maßnahmen sind in vorteilhafter Weise dazu geeignet, das Risiko von Manipulationen weiter zu verringern bzw. diese deutlich zu erschweren.

Entsprechend einer Ausführungsform des erfindungsgemäßen Verfahrens ist vorgesehen, dass die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

Bei einer Ausgestaltung des erfindungsgemäßen Verfahrens ist vorgesehen, dass die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

Entsprechend einer Weiterbildung des erfindungsgemäßen Verfahrens ist vorgesehen, dass die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

Bei einer bevorzugten Ausführungsform des erfindungsgemäßen Verfahrens ist vorgesehen, dass mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

Bei einer ebenfalls bevorzugten Weiterbildung des erfindungsgemäßen Verfahrens ist vorgesehen, dass mithilfe des Skalarprodukts rechnerisch der Winkel zwischen den beiden Vektoren bestimmt wird.

Die vorstehenden optionalen Maßnahmen sind in vorteilhafter Weise dazu geeignet, das erfindungsgemäße Verfahren in kostengünstiger Weise zu realisieren.

Bei einer bevorzugten Ausführungsform des erfindungsgemäßen Verfahrens ist vorgesehen, dass der ermittelte Winkel einen vorbestimmten Schwellenwert von weitgehend Null Grad überschreitet, insbesondere ein Schwellenwert größer als 1 bis 10 Grad, vorzugsweise 1 bis 5 Grad.

Entsprechend einer bevorzugten Weiterbildung des erfindungsgemäßen Verfahrens ist vorgesehen, dass der Schwellenwert, der größer als Null Grad ist, mit geringer werdender Entfernung des Identifikationsgebers vom Fahrzeug vergrößert wird, wobei die Entfernung vorzugsweise über eine Laufzeitmessung zwischen den Signalen, die zwischen Fahrzeug und Identifikationsgeber ausgetauscht werden, bestimmt wird.

Bei einer bevorzugten Ausführungsform des erfindungsgemäßen Verfahrens ist vorgesehen, dass die erste, zweite und dritte Antenne jeweils auf einer gleichen oder unterschiedlichen Frequenz im Frequenzbereich von 20 kHz bis 140 kHz, vorzugsweise auf ca. 125 kHz, vorzugsweise zeitlich versetzt, senden.

Durch diese vorstehenden optionalen Maßnahmen kann das erfindungsgemäße Verfahren noch sicherer gestaltet werden.

Die Erfindung ermöglicht in vorteilhafter Weise die Bereitstellung eines Fahrzeugzugangssystems zur Autorisierung der Nutzung eines Kraftfahrzeugs, bei dem das Fahrzeugzugangssystem die Ausführung mindestens eines Schritts eines erfindungsgemäßen Verfahrens bewirkt.

Die Erfindung ermöglicht weiter die Bereitstellung eines erfindungsgemäßen Fahrzeugzugangssystems zur Autorisierung der Nutzung eines Kraftfahrzeugs, bei dem das Fahrzeugzugangssystem die Ausführung mindestens eines Schritts eines Verfahrens nach einem der vorstehenden Ansprüche ausführt oder bewirkt und der Identifikationsgeber ein Funkschlüssel oder ein Smartphone ist, vorzugsweise mit einer Identifikationsgeber-Softwareanwendung, wie eine sog. App.

Die Erfindung schlägt ferner ein erfindungsgemäßes Fahrzeugzugangssystem zur Autorisierung der Nutzung eines Kraftfahrzeugs vor, bei dem der Identifikationsgeber ein mit einem Rechnerchip versehenes Smartphone, ein mit einem Rechnerchip versehener Funk-Fahrzeugschlüssel oder eine Chipkarte mit einem Rechnerchip ist.

Weiter schlägt die Erfindung ein erfindungsgemäßes Fahrzeugzugangssystem zur Autorisierung der Nutzung eines Kraftfahrzeugs vor, bei dem der Identifikationsgeber einen Sensor zur Bestimmung bzw. Ermittlung eines elektromagnetischen Feldes und/oder der Komponenten des elektromagnetischen Feldes aufweist, das von einer oder mehreren Fahrzeugantennen im Bereich des Identifikationsgebers erzeugt worden ist.

Die Erfindung schlägt eine Wegfahrsperre zur Autorisierung der Nutzung eines Kraftfahrzeugs vor, die die Ausführung mindestens eines Schritts eines erfindungsgemäßen Verfahrens bewirkt.

Ebenso schlägt die Erfindung ein Kraftfahrzeug vor, das die Ausführung mindestens eines Schritts eines erfindungsgemäßen Verfahrens bewirkt bzw. an der Ausführung beteiligt ist.

Schließlich wird ein Computerprogrammprodukt zur Steuerung mindestens eines Prozessors, der den Ablauf mindestens eines Schritts eines erfindungsgemäßen Verfahrens bewirkt, vorgeschlagen.

## Patentansprüche

1. Verfahren zur Autorisierung der Nutzung eines Kraftfahrzeugs, insbesondere ein zwei- oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist, mit den folgenden Schritten:
- die erste Fahrzeugantenne sendet ein erstes Signal aus, das von der Identifikationsgeber-Antenne empfangen wird,
- der Identifikationsgeber ermittelt zumindest eine der räumlichen Komponenten des ersten elektromagnetischen Feldes des empfangenen ersten Signals, insbesondere unter Verwendung eines winkelauflösenden Magnetfeldsensors,
- die zweite Fahrzeugantenne sendet ein zweites Signal aus, das von der Identifikationsgeber-Antenne empfangen wird,
- der Identifikationsgeber ermittelt zumindest eine der räumlichen Komponenten des zweiten elektromagnetischen Feldes des empfangenen zweiten Signals, insbesondere unter Verwendung des winkelauflösenden Magnetfeldsensors,
- der Identifikationsgeber überträgt die ermittelte zumindest eine räumliche Komponente des ersten elektromagnetischen Feldes des empfangenen ersten Signals und die ermittelte zumindest eine räumliche Komponente des zweiten elektromagnetischen Feldes des empfangenen zweiten Signals oder erste entsprechende Daten zum Fahrzeug,
- ein Rechner, insbesondere ein Rechner im Fahrzeug, ermittelt den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals, und
- das Fahrzeug stellt nur dann ein erstes Autorisierungssignal zur Autorisierung der Nutzung des Kraftfahrzeugs bereit, wenn der ermittelte Winkel einen vorbestimmten Schwellenwert überschreitet,
**dadurch gekennzeichnet, dass**
der Identifikationsgeber mit einem Bewegungssensor versehen ist bzw. wird, der Bewegungssensor ermittelt, ob er bzw. ob der Identifikationsgeber bewegt wird und der Identifikationsgeber nur dann ein zweites Autorisierungssignal zur Autorisierung der Nutzung des Kraftfahrzeugs an das Kraftfahrzeug sendet, wenn der Bewegungssensor eine Bewegung des Identifikationsgebers ermittelt, wobei die ersten entsprechenden Daten das zweite Autorisierungssignal darstellen können.

2. Verfahren zur Autorisierung der Nutzung eines Kraftfahrzeugs nach einem der vorstehenden Ansprüche, **dadurch gekennzeichnet, dass** der Bewegungssensor wiederholt ermittelt, ob er bewegt wird und der Bewegungssensor jeweils bei einer erkannten bzw. ermittelten Bewegung das Auftreten der Bewegung und/oder die Art der Bewegung mit einem Zeitstempel versieht.

3. Verfahren zur Autorisierung der Nutzung eines Kraftfahrzeugs nach einem der vorstehenden Ansprüche, **dadurch gekennzeichnet, dass** jeweils das mit einem Zeitstempel versehene Auftreten der Bewegung und/oder die mit einem Zeitstempel versehene jeweilige Art der Bewegung in einem Datenspeicher im Identifikationsgeber und/oder in einem Datenspeicher in dem Kraftfahrzeug gespeichert und für einen späteren Bewegungs-Muster-Vergleich mit einem Referenz-Bewegungsmuster bereitgehalten wird.

4. Verfahren zur Autorisierung der Nutzung eines Kraftfahrzeugs nach einem der vorstehenden Ansprüche, **dadurch gekennzeichnet, dass** der Bewegungs-Muster-Vergleich von einem Rechner im Identifikationsgeber und/oder von einem Rechner im Kraftfahrzeug durchgeführt wird und der Identifikationsgeber und/oder das Kraftfahrzeug nur dann ein Autorisierungssignal zur Autorisierung der Nutzung des Kraftfahrzeugs bereitstellt, wenn der Rechner im Identifikationsgeber und/oder der Rechner im Kraftfahrzeug einen vorbestimmten Grad an Übereinstimmung des Bewegungsmusters des Identifikationsgebers mit dem Referenz-Bewegungsmuster ermittelt.

5. Verfahren zur Autorisierung der Nutzung eines Kraftfahrzeugs nach einem der vorstehenden Ansprüche, **dadurch gekennzeichnet, dass** der Identifikationsgeber nur dann Daten, wie ein Autorisierungssignal, aussendet, wenn er aktuell bewegt wird.

6. Verfahren zur Autorisierung der Nutzung eines Kraftfahrzeugs nach einem der vorstehenden Ansprüche, **dadurch gekennzeichnet, dass** das Referenz-Bewegungs-Muster das Bewegungsmuster einer typischen Annäherung an das Fahrzeug ist.

7. Verfahren zur Autorisierung der Nutzung eines Kraftfahrzeugs nach einem der vorstehenden Ansprüche, **dadurch gekennzeichnet, dass** das Referenz-Bewegungsmuster wird für jeden Berechtigten und/oder für jeden Identifikationsgeber erhoben und für einen späteren Bewegungs-Muster-Vergleich im Identifikationsgeber und/oder im zugeordneten Kraftfahrzeug gespeichert wird.

8. Verfahren zur Autorisierung der Nutzung eines Kraftfahrzeugs nach einem der vorstehenden Ansprüche, **dadurch gekennzeichnet, dass** der Bewegungssensor durch einen Beschleunigungssensor gebildet wird.

9. Verfahren zur Autorisierung der Nutzung eines Kraftfahrzeugs nach einem der vorstehenden Ansprüche, **dadurch gekennzeichnet, dass** der Zeitabstand zwischen der Aussendung des ersten Signals durch die erste Fahrzeugantenne und der Aussendung des zweiten Signals durch die zweite Fahrzeugantenne zeitlich so kurz - aber verschieden von Null - gewählt wird, dass der vom Fahrer mitgeführte Identifikationsgeber beim Zugehen des Fahrers auf das Fahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird.

10. Verfahren zur Autorisierung der Nutzung eines Kraftfahrzeugs nach einem der vorstehenden Ansprüche, **dadurch gekennzeichnet, dass** das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

11. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

12. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

13. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

14. Verfahren zur Autorisierung der Nutzung eines Kraftfahrzeugs nach einem der vorstehenden Ansprüche, **dadurch gekennzeichnet, dass** mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

15. Verfahren zur Autorisierung der Nutzung eines Kraftfahrzeugs nach einem der vorstehenden Ansprüche, **dadurch gekennzeichnet, dass** mithilfe des Skalarprodukts rechnerisch der Winkel zwischen den beiden Vektoren bestimmt wird.

16. Verfahren zur Autorisierung der Nutzung eines Kraftfahrzeugs nach einem der vorstehenden Ansprüche, **dadurch gekennzeichnet, dass** der ermittelte Winkel einen vorbestimmten Schwellenwert von weitgehend Null Grad überschreitet, insbesondere ein Schwellenwert größer als 1 bis 10 Grad, insbesondere 1 bis 5 Grad.

17. Verfahren zur Autorisierung der Nutzung eines Kraftfahrzeugs nach einem der vorstehenden Ansprüche, **dadurch gekennzeichnet, dass** der Schwellenwert, der größer als Null Grad ist, mit geringer werdender Entfernung des Identifikationsgebers vom Fahrzeug vergrößert wird, wobei die Entfernung insbesondere über eine Laufzeitmessung zwischen den Signalen, die zwischen Fahrzeug und Identifikationsgeber ausgetauscht werden, bestimmt wird.

18. Verfahren zur Autorisierung der Nutzung eines Kraftfahrzeugs nach einem der vorstehenden Ansprüche, **dadurch gekennzeichnet, dass** die erste, zweite und dritte Antenne jeweils auf einer gleichen oder unterschiedlichen Frequenz im Frequenzbereich von 20 kHz bis 140 kHz, insbesondere auf ca. 125 kHz, insbesondere zeitlich versetzt, senden.

19. Fahrzeugzugangssystem zur Autorisierung der Nutzung eines Kraftfahrzeugs, **gekennzeichnet durch** die Ausführung eines Verfahrens nach einem der vorstehenden Ansprüche.

20. Fahrzeugzugangssystem zur Autorisierung der Nutzung eines Kraftfahrzeugs, **dadurch gekennzeichnet, dass** Fahrzeugzugangssystem die Ausführung eines Verfahrens nach einem der vorstehenden Ansprüche ausführt oder bewirkt und der Identifikationsgeber ein Funkschlüssel oder ein Smartphone, insbesondere mit einer Identifikationsgeber-Softwareanwendung, wie eine sog. App, ist.

21. Fahrzeugzugangssystem zur Autorisierung der Nutzung eines Kraftfahrzeugs nach Anspruch 20, **dadurch gekennzeichnet, dass** der Identifikationsgeber ein mit einem Rechnerchip versehenes Smartphone, ein mit einem Rechnerchip versehener Funk-Fahrzeugschlüssel oder eine Chipkarte mit Rechnerchip ist.

22. Fahrzeugzugangssystem zur Autorisierung der Nutzung eines Kraftfahrzeugs nach Anspruch 20 oder 21, **dadurch gekennzeichnet, dass** der Identifikationsgeber einen Sensor zur Bestimmung bzw. Ermittlung eines elektromagnetischen Feldes und/oder der Komponenten des elektromagnetischen Feldes aufweist, das von einer oder mehreren Fahrzeugantennen im Bereich des Identifikationsgebers erzeugt worden ist.

23. Wegfahrsperre zur Autorisierung der Nutzung eines Kraftfahrzeugs, **gekennzeichnet durch** die Ausführung eines Verfahrens nach einem der Ansprüche 1 bis 18.

24. Computerprogrammprodukt zur Steuerung mindestens eines Prozessors, der den Ablauf eines Verfahrens nach einem der Ansprüche 1 bis 18 bewirkt.

## Claims

1. Method for authorizing the use of a motor vehicle, in particular a two-wheeled or four-wheeled motor vehicle, which has at least one first and one second antenna, wherein the first antenna and the second antenna are spatially remote from one another, by way of a portable identification transmitter that has an identification transmitter antenna, having the following steps:
- the first vehicle antenna emits a first signal that is received by the identification transmitter antenna,
- the identification transmitter establishes at least one of the spatial components of the first electromagnetic field of the received first signal, in particular using an angle-resolving magnetic field sensor,
- the second vehicle antenna emits a second signal that is received by the identification transmitter antenna,
- the identification transmitter establishes at least one of the spatial components of the second electromagnetic field of the received second signal, in particular using the angle-resolving magnetic field sensor,
- the identification transmitter transmits the established at least one spatial component of the first electromagnetic field of the received first signal and the established at least one spatial component of the second electromagnetic field of the received second signal or first corresponding data to the vehicle,
- a computer, in particular a computer in the vehicle, establishes the angle at least between the established spatial component of the first electromagnetic field of the received first signal and the established spatial component of the second electromagnetic field of the received second signal, and
- the vehicle provides a first authorization signal for authorizing the use of the motor vehicle only when the established angle exceeds a predetermined threshold value,
**characterized in that**
the identification transmitter is provided with a motion sensor, the motion sensor establishes whether it or whether the identification transmitter is being moved, and the identification transmitter transmits a second authorization signal for authorizing the use of the motor vehicle to the motor vehicle only when the motion sensor establishes a movement of the identification transmitter, wherein the first corresponding data may constitute the second authorization signal.

2. Method for authorizing the use of a motor vehicle according to one of the preceding claims, **characterized in that** the motion sensor repeatedly establishes whether it is being moved and, when a movement is recognized or established, the motion sensor in each case provides the occurrence of the movement and/or the type of the movement with a timestamp.

3. Method for authorizing the use of a motor vehicle according to either of the preceding claims, **characterized in that** in each case the occurrence of the movement provided with a timestamp and/or the respective type of the movement provided with a timestamp are stored in a data store in the identification transmitter and/or in a data store in the motor vehicle and retained for a subsequent movement pattern comparison with a reference movement pattern.

4. Method for authorizing the use of a motor vehicle according to one of the preceding claims, **characterized in that** the movement pattern comparison is performed by a computer in the identification transmitter and/or by a computer in the motor vehicle, and the identification transmitter and/or the motor vehicle provides an authorization signal for authorizing the use of the motor vehicle only when the computer in the identification transmitter and/or the computer in the motor vehicle establishes a predetermined match level between the movement pattern of the identification transmitter and the reference movement pattern.

5. Method for authorizing the use of a motor vehicle according to one of the preceding claims, **characterized in that** the identification transmitter emits data, such as an authorization signal, only when it is currently being moved.

6. Method for authorizing the use of a motor vehicle according to one of the preceding claims, **characterized in that** the reference movement pattern is the movement pattern of a typical approach to the vehicle.

7. Method for authorizing the use of a motor vehicle according to one of the preceding claims, **characterized in that** the reference movement pattern is collected for each authorized party and/or for each identification transmitter and stored in the identification transmitter and/or in the associated motor vehicle for a subsequent movement pattern comparison.

8. Method for authorizing the use of a motor vehicle according to one of the preceding claims, **characterized in that** the motion sensor is formed by an acceleration sensor.

9. Method for authorizing the use of a motor vehicle according to one of the preceding claims, **characterized in that** the time difference between the emission of the first signal by the first vehicle antenna and the emission of the second signal by the second vehicle antenna is selected to be so short in time - but other than zero - that the identification transmitter carried by the driver is substantially not moved as the driver approaches the vehicle, and therefore the establishment of the angle at least between the established spatial component of the first electromagnetic field of the received first signal and the established spatial component of the second electromagnetic field of the received second signal is substantially not falsified or not unusable as a result of the movement of the driver or as a result of the movement, connected therewith, of the identification transmitter.

10. Method for authorizing the use of a motor vehicle according to one of the preceding claims, **characterized in that** the motor vehicle has a further third antenna that is spatially remote from the first and the second antenna, respectively, and **in that**, in the same way, the angle at least between the established spatial component of the first electromagnetic field of the received first signal and the established spatial component of the third electromagnetic field of a third signal emitted by the third antenna and received by the identification transmitter is determined.

11. Method for authorizing the use of a motor vehicle according to one of the preceding claims, **characterized in that** the spatial components, established by the identification transmitter, of the first electromagnetic field of the received first signal are the x, y and z components of the electromagnetic field of a first Cartesian coordinate system.

12. Method for authorizing the use of a motor vehicle according to one of the preceding claims, **characterized in that** the spatial components, established by the identification transmitter, of the second electromagnetic field of the received second signal are the x, y and z components of the electromagnetic field, substantially the components with reference to the first Cartesian coordinate system, substantially because the Cartesian coordinate system or reference system underlying the establishment of the components changes spatially only slightly upon slight movements of the identification transmitter in very short time periods between the repeated establishment of the angles.

13. Method for authorizing the use of a motor vehicle according to one of the preceding claims, **characterized in that** the spatial components, established by the identification transmitter, of the third electromagnetic field of the received third signal are the x, y and z components of the electromagnetic field, substantially those of the first Cartesian coordinate system.

14. Method for authorizing the use of a motor vehicle according to one of the preceding claims, **characterized in that** at least one first vector from the x, y and z components, established by the identification transmitter, of the first electromagnetic field of the received first signal and one second vector from the x, y and z components, established by the identification transmitter, of the second electromagnetic field of the received second signal is formed computationally, and their scalar product is formed computationally from these two vectors.

15. Method for authorizing the use of a motor vehicle according to one of the preceding claims, **characterized in that** the angle between the two vectors is determined computationally with the aid of the scalar product.

16. Method for authorizing the use of a motor vehicle according to one of the preceding claims, **characterized in that** the established angle exceeds a predetermined threshold value of substantially zero degrees, in particular a threshold value greater than 1 to 10 degrees, in particular 1 to 5 degrees.

17. Method for authorizing the use of a motor vehicle according to one of the preceding claims, **characterized in that** the threshold value, which is greater than zero degrees, is increased as the distance of the identification transmitter from the vehicle decreases, wherein the distance is in particular determined via a propagation time measurement between the signals that are exchanged between vehicle and identification transmitter.

18. Method for authorizing the use of a motor vehicle according to one of the preceding claims, **characterized in that** the first, second and third antenna each transmit on an identical or different frequency in the frequency range of 20 kHz to 140 kHz, in particular on about 125 kHz, in particular in a temporally offset manner.

19. Vehicle access system for authorizing the use of a motor vehicle, **characterized by** the execution of a method according to one of the preceding claims.

20. Vehicle access system for authorizing the use of a motor vehicle, **characterized in that** the vehicle access system executes or brings about the execution of a method according to one of the preceding claims and the identification transmitter is a radio key or a smartphone, in particular having an identification transmitter software application, such as what is known as an app.

21. Vehicle access system for authorizing the use of a motor vehicle according to Claim 20, **characterized in that** the identification transmitter is a smartphone provided with a computer chip, a radio vehicle key provided with a computer chip or a chip card having a computer chip.

22. Vehicle access system for authorizing the use of a motor vehicle according to Claim 20 or 21, **characterized in that** the identification transmitter has a sensor for determining or establishing an electromagnetic field and/or the components of the electromagnetic field that has been produced by one or more vehicle antennae in the region of the identification transmitter.

23. Immobilizer for authorizing the use of a motor vehicle, **characterized by** the execution of a method according to one of Claims 1 to 18.

24. Computer program product for controlling at least one processor that brings about the performance of a method according to one of Claims 1 to 18.

## Revendications

1. Procédé d'autorisation de l'utilisation d'un véhicule automobile, en particulier d'un véhicule automobile à deux ou quatre roues, qui comporte au moins une première et une deuxième antenne, la première antenne et la deuxième antenne étant espacées spatialement l'une de l'autre, au moyen d'un transmetteur d'identification portable qui comporte une antenne de transmetteur d'identification, le procédé comprenant les étapes suivantes :
- la première antenne de véhicule émet un premier signal qui est reçu par l'antenne de transmetteur d'identification,
- le transmetteur d'identification détermine au moins une des composantes spatiales du premier champ électromagnétique du premier signal reçu, notamment à l'aide d'un capteur de champ magnétique à résolution angulaire,
- la deuxième antenne de véhicule émet un deuxième signal qui est reçu par l'antenne de transmetteur d'identification,
- le transmetteur d'identification détermine au moins une des composantes spatiales du deuxième champ électromagnétique du deuxième signal reçu, notamment à l'aide du capteur de champ magnétique à résolution angulaire,
- le transmetteur d'identification transmet l'au moins une composante spatiale déterminée du premier champ électromagnétique du premier signal reçu et l'au moins une composante spatiale déterminée du deuxième champ électromagnétique du deuxième signal reçu ou des premières données correspondantes relatives au véhicule,
- un calculateur, en particulier un calculateur du véhicule, détermine l'angle formé au moins entre la composante spatiale déterminée du premier champ électromagnétique du premier signal reçu et la composante spatiale déterminée du deuxième champ électromagnétique du deuxième signal reçu, et
- le véhicule ne fournit un premier signal d'autorisation pour autoriser l'utilisation du véhicule automobile que si l'angle déterminé est supérieur à une valeur seuil prédéterminée,
**caractérisé en ce que**
le transmetteur d'identification est ou sera pourvu d'un capteur de mouvement, le capteur de mouvement détermine si lui ou le transmetteur d'identification est déplacé et si le transmetteur d'identification n'envoie un deuxième signal d'autorisation au véhicule automobile pour autoriser l'utilisation du véhicule automobile que si le capteur de mouvement détermine un mouvement du transmetteur d'identification, les premières données correspondantes pouvant représenter le deuxième signal d'autorisation.

2. Procédé d'autorisation de l'utilisation d'un véhicule automobile selon l'une des revendications précédentes, **caractérisé en ce que** le capteur de mouvement détermine à plusieurs reprises s'il est déplacé et, lorsqu'un mouvement est détecté ou déterminé, le capteur de mouvement munit l'occurrence du mouvement et/ou le type de mouvement d'un horodatage.

3. Procédé d'autorisation de l'utilisation d'un véhicule automobile selon l'une des revendications précédentes, **caractérisé en ce que** l'occurrence du mouvement munie d'un horodatage et/ou le type respectif de mouvement muni d'un horodatage sont mémorisés dans une mémoire de données située dans le transmetteur d'identification et/ou dans une mémoire de données située dans le véhicule automobile et sont maintenus prêts pour une comparaison ultérieure de modèles de mouvement avec un modèle de mouvement de référence.

4. Procédé d'autorisation de l'utilisation d'un véhicule automobile selon l'une des revendications précédentes, **caractérisé en ce que** la comparaison de modèles de mouvement est effectuée par un calculateur situé dans le transmetteur d'identification et/ou par un calculateur situé dans le véhicule automobile et le transmetteur d'identification et/ou le véhicule automobile ne fournit un signal d'autorisation destiné à autoriser l'utilisation du véhicule automobile que lorsque le calculateur situé dans le transmetteur d'identification et/ou le calculateur situé dans le véhicule automobile détermine un degré prédéterminé de correspondance entre le modèle de mouvement du transmetteur d'identification et le modèle de mouvement de référence.

5. Procédé d'autorisation de l'utilisation d'un véhicule automobile selon l'une des revendications précédentes, **caractérisé en ce que** le transmetteur d'identification n'envoie des données, telles qu'un signal d'autorisation, que lorsqu'il est en cours de déplacement.

6. Procédé d'autorisation de l'utilisation d'un véhicule automobile selon l'une des revendications précédentes, **caractérisé en ce que** le modèle de mouvement de référence est le modèle de mouvement d'une approche typique du véhicule.

7. Procédé d'autorisation de l'utilisation d'un véhicule automobile selon l'une des revendications précédentes, **caractérisé en ce que** le modèle de mouvement de référence est recueilli pour chaque personne autorisée et/ou est mémorisé dans le transmetteur d'identification et/ou dans le véhicule automobile associé pour chaque transmetteur d'identification et pour une comparaison ultérieure de modèles de mouvement.

8. Procédé d'autorisation de l'utilisation d'un véhicule automobile selon l'une des revendications précédentes, **caractérisé en ce que** le capteur de mouvement est formé par un capteur d'accélération.

9. Procédé d'autorisation de l'utilisation d'un véhicule automobile selon l'une des revendications précédentes, **caractérisé en ce que** l'intervalle de temps entre l'émission du premier signal par la première antenne de véhicule et l'émission du deuxième signal par la deuxième antenne de véhicule est choisi pour être temporellement court, mais différent de zéro, de sorte que le transmetteur d'identification porté par le conducteur ne soit pas dans une grande mesure déplacé lorsque le conducteur s'approche du véhicule et par conséquent la détermination de l'angle formé au moins entre la composante spatiale déterminée du premier champ électromagnétique du premier signal reçu et la composante spatiale déterminée du deuxième champ électromagnétique du deuxième signal reçu ne soit pas dans une large mesure faussée ou rendue inutilisable à cause du mouvement du conducteur ou du mouvement associé du transmetteur d'identification.

10. Procédé d'autorisation de l'utilisation d'un véhicule automobile selon l'une des revendications précédentes, **caractérisé en ce que** le véhicule automobile comporte une troisième antenne supplémentaire qui est espacée spatialement de la première et de la deuxième antenne et **en ce que** l'angle formé au moins entre la composante spatiale déterminée du premier champ électromagnétique du premier signal reçu et la composante spatiale déterminée du troisième champ électromagnétique d'un troisième signal émis par la troisième antenne et reçu par le transmetteur d'identification est déterminé de manière analogue.

11. Procédé d'autorisation de l'utilisation d'un véhicule automobile selon l'une des revendications précédentes, **caractérisé en ce que** les composantes spatiales du premier champ électromagnétique du premier signal reçu déterminées par le transmetteur d'identification sont les composantes x, y et z du champ électromagnétique d'un premier système cartésien de coordonnées.

12. Procédé d'autorisation de l'utilisation d'un véhicule automobile selon l'une des revendications précédentes, **caractérisé en ce que** les composantes spatiales du deuxième champ électromagnétique du deuxième signal reçu, déterminées par le transmetteur d'identification, sont les composantes x, y et z du champ électromagnétique, dans une large mesure les composantes en référence au premier système cartésien de coordonnées, dans une large mesure parce que le système cartésien de coordonnées ou le système de référence, sur lequel repose la détermination des composantes, ne varie spatialement que de manière insignifiante dans de très courts intervalles de temps entre des déterminations d'angles répétées lors de mouvements insignifiants du transmetteur d'identification.

13. Procédé d'autorisation de l'utilisation d'un véhicule automobile selon l'une des revendications précédentes, **caractérisé en ce que** les composantes spatiales du troisième champ électromagnétique du troisième signal reçu, déterminées par le transmetteur d'identification, sont les composantes x, y et z du champ électromagnétique, dans une large mesure celles du premier système cartésien de coordonnées.

14. Procédé d'autorisation de l'utilisation d'un véhicule automobile selon l'une des revendications précédentes, **caractérisé en ce qu'**au moins un premier vecteur est formé par calcul à partir des composantes x, y et z du premier champ électromagnétique du premier signal reçu, déterminées par le transmetteur d'identification, et un deuxième vecteur est formé par calcul à partir des composantes x, y et z du deuxième champ électromagnétique du deuxième signal reçu, déterminées par le transmetteur d'identification, et leur produit scalaire est formé par calcul à partir de ces deux vecteurs.

15. Procédé d'autorisation de l'utilisation d'un véhicule automobile selon l'une des revendications précédentes, **caractérisé en ce que** l'angle formé entre les deux vecteurs est déterminé par calcul à l'aide du produit scalaire.

16. Procédé d'autorisation de l'utilisation d'un véhicule automobile selon l'une des revendications précédentes, **caractérisé en ce que** l'angle déterminé est supérieur à une valeur seuil prédéterminée dans une large mesure égale à zéro degré, notamment une valeur seuil supérieure à une valeur de 1 à 10 degrés, notamment de 1 à 5 degrés.

17. Procédé d'autorisation de l'utilisation d'un véhicule automobile selon l'une des revendications précédentes, **caractérisé en ce que** la valeur seuil, qui est supérieure à zéro degré, est augmentée à mesure que la distance du transmetteur d'identification au véhicule diminue, la distance étant déterminée notamment par une mesure de temps de propagation entre les signaux échangés entre le véhicule et le transmetteur d'identification.

18. Procédé d'autorisation de l'utilisation d'un véhicule automobile selon l'une des revendications précédentes, **caractérisé en ce que** la première, la deuxième et la troisième antenne émettent chacune à une fréquence identique ou différente dans la gamme de fréquences allant de 20 kHz à 140 kHz, en particulier à environ 125 kHz, en particulier avec un décalage temporel.

19. Système d'accès à un véhicule, destiné à autoriser l'utilisation d'un véhicule automobile, **caractérisé par** la mise en œuvre d'un procédé selon l'une des revendications précédentes.

20. Système d'accès à un véhicule, destiné à autoriser l'utilisation d'un véhicule automobile, **caractérisé en ce que** le système d'accès à un véhicule effectue ou déclenche la mise en œuvre d'un procédé selon l'une des revendications précédentes et le transmetteur d'identification est une radio-clé ou un téléphone intelligent, en particulier pourvu d'une application logicielle de transmetteur d'identification, par exemple ce que l'on appelle une appli.

21. Système d'accès à un véhicule, destiné à autoriser l'utilisation d'un véhicule automobile selon la revendication 20, **caractérisé en ce que** le transmetteur d'identification est un téléphone intelligent muni d'une puce informatique, une radio-clé de véhicule munie d'une puce informatique ou une carte à puce munie d'une puce informatique.

22. Système d'accès à un véhicule, destiné à autoriser l'utilisation d'un véhicule automobile selon la revendication 20 ou 21, **caractérisé en ce que** le transmetteur d'identification comporte un capteur destiné à déterminer ou détecter un champ électromagnétique et/ou les composantes du champ électromagnétique qui a été généré par une ou plusieurs antennes de véhicule dans la zone du transmetteur d'identification.

23. Immobilisateur destiné à autoriser l'utilisation d'un véhicule automobile, **caractérisé par** la mise en œuvre d'un procédé selon l'une des revendications 1 à 18.

24. Progiciel destiné à commander au moins un processeur qui déclenche le déroulement d'un procédé selon l'une des revendications 1 à 18.
